# EUROPEAN PATENT APPLICATION

(11) **EP 4 483 992 A1**
(43) Date of publication of application: **01.01.2025**
(21) Application number: 23756386.1
(22) Date of filing: 15.02.2023
(51) Int. Cl.: B01D 61/36, B01J 35/04, C07C 29/152, C07C 31/04, C07C 31/08, C07B 61/00

(54) **REACTOR**

(30) Priority: 21.02.2022 JP 2022025130
(71) Applicant: NGK Insulators, Ltd., Nagoya-shi, Aichi 467-8530 (JP)
(72) Inventor: IIDA, Kazuki, Nagoya-shi, Aichi 467-8530 (JP); NAKAGAWA, Kosuke, Nagoya-shi, Aichi 467-8530 (JP); KAN, Hirofumi, Nagoya-shi, Aichi 467-8530 (JP); TORII, Atsushi, Nagoya-shi, Aichi 467-8530 (JP)
(74) Representative: Müller-Boré & Partner Patentanwälte PartG mbB
(86) International application number: PCT/JP2023/005154
(87) International publication number: WO 2023/157861

(57) **Abstract**

A reactor (1) includes a porous support body (10), a plurality of first cells (11) through which a raw material gas flows, a plurality of second cells (12) through which the sweep gas flows, separation membranes (20), and a catalyst (30). The first cells (11) pass through the porous support body (10) in the longitudinal direction. The second cells (12) extend in the porous support body (10) in the longitudinal direction. The separate membranes (20) are respectively formed on inner peripheral surfaces of the first cells (11). The catalyst (30) is arranged inside the separation membranes (10). In a cross section taken along a transverse direction, the average cross-sectional area of the first cells (11) is larger than the average cross-sectional area of the second cells (12).

## Description

### TECHNICAL FIELD

The present invention relates to a reactor.

### BACKGROUND ART

In recent years, reactors have been developed that can improve conversion efficiency by separating a product of a conversion reaction in which a raw material gas containing hydrogen and carbon oxide is converted to a liquid fuel such as methanol and ethanol (specifically, a fuel that is in a liquid state at normal temperature and pressure).

For example, Patent Literature 1 discloses a tube-type reactor including a first cell provided on a non-permeation side of a plurality of separation membranes and a second cell provided on a permeation side of the separation membranes. The separation membranes are supported by a tubular porous support body. A catalyst is provided in the first cell and a raw material gas is supplied to the first cell. A sweep gas for sweeping a product that passed through the separation membranes is supplied to a second flow path.

### CITATION LIST

### Patent Literature

Patent Literature 1: JP 2018-8940A

### SUMMARY

### TECHNICAL PROBLEM

The inventors of the present invention considered carrying out the aforementioned conversion reaction by a monolith-type reactor. The monolith-type reactor includes a porous support body, a plurality of first cells that extend through the porous support body and in which the raw material gas flows, a plurality of second cells formed in the porous support body and in which the sweep gas flows, separation membranes formed on inner peripheral surfaces of the first cells, and a catalyst disposed inside the separation membranes.

In the monolith-type reactor, the filling rate of the catalyst can be brought closer to the maximum filling density by increasing the diameter of the first cells, thus making it possible to increase the amount of the catalyst, which improves the conversion efficiency. On the other hand, the strength of the porous support body decreases. For this reason, in the monolith-type reactor, it is not easy to achieve both improvement in the conversion efficiency and ensuring strength.

Further, in the tube-type reactor, by reducing the number of separation membranes, the amount of catalyst can be increased and the conversion efficiency can be improved. On the other hand, the separation member is subjected to not only the increased weight of the catalyst, but also stress due to thermal expansion of the catalyst, and thus the porous support body supporting the separation membrane is easily damaged. For this reason, in the tube-type reactor as well, it is not easy to achieve both improvement in the conversion efficiency and ensuring strength.

The present invention aims to provide a reactor capable of achieving both improvement in the conversion efficiency and ensuring strength.

### SOLUTION TO PROBLEM

A reactor according to a first aspect of the present invention is a monolith-type reactor used for a conversion reaction for converting a raw material gas containing at least hydrogen and carbon oxide into a liquid fuel. The reactor includes a porous support body, a plurality of first cells through which a raw material gas flows, a plurality of second cells through which the sweep gas flows, separation membranes, and a catalyst. The first cells pass through the porous support body in a first direction. The second cells extend in the porous support body in the first direction. The separate membranes are respectively formed on inner peripheral surfaces of the first cells and permeable to a product of the conversion reaction. The catalyst is arranged inside the separation membranes, and promotes the conversion reaction. In a cross section taken along a second direction perpendicular to the first direction, the average cross-sectional area of the first cells is larger than the average cross-sectional area of the second cells.

A reactor according to a second aspect of the present invention is the reactor according to the first aspect, in which, in the cross section, the plurality of first cells each have a circular shape, in the cross section, the plurality of second cells each have a circular shape, and in the cross section, an average diameter of the plurality of first cells is larger than an average diameter of the plurality of second cells.

A reactor according to a third aspect of the present invention is the reactor according to the first aspect, in which, in the cross section, the plurality of first cells each have a circular shape, in the cross section, the plurality of second cells each have a polygonal shape, and in the cross section, an average diameter of the plurality of first cells is larger than an average diameter of the plurality of second cells.

A reactor according to a fourth aspect of the present invention is the reactor according to any one of the first to third aspects, further including a plurality of first slits through which the sweep gas flows, and a plurality of second slits through which the sweep gas flows. In the cross section, the plurality of second cells are arranged in a plurality of rows, the plurality of first slits respectively pass through first end portions of the plurality of rows, and the plurality of second slits respectively pass through second end portions of the plurality of rows.

A reactor according to a fifth aspect of the present invention is a tube-type reactor used for a conversion reaction for converting a raw material gas containing at least hydrogen and carbon oxide into a liquid fuel. The reactor includes a plurality of separate membranes, a first cell, a plurality of second cells, and a catalyst. Each of the separate membranes is supported by a porous support body. The first cell is disposed on a non-permeation side of the plurality of separation membranes, and the raw material gas flows through the first cell. The plurality of second cells are respectively disposed on a permeation side of the plurality of separation membranes, and a sweep gas flows through the second cells. The catalyst is disposed on a non-permeation side of each of the plurality of separation membranes, and the sweep gas flows through the catalyst. The first cell and the plurality of second cells extend in a first direction. In a cross section taken along a second direction perpendicular to the first direction, a value obtained by dividing a cross-sectional area of the first cell by the number of second cells is larger than an average cross-sectional area of the plurality of second cells.

### ADVANTAGEOUS EFFECTS

According to the present invention, it is possible to provide a reactor capable of achieving both improvement in the conversion efficiency and ensuring strength.

### BRIEF DESCRIPTION OF DRAWINGS

FIG. 1 is a perspective view of a monolith-type reactor 1 according to an embodiment.
FIG. 2 is a cross-sectional view taken along line II-II in FIG. 1.
FIG. 3 is a cross-sectional view taken along line III-III in FIG. 1.
FIG. 4 is a cross-sectional view taken along line IV-IV in FIG. 1.
FIG. 5 is a cross-sectional view taken along line V-V in FIG. 2.
FIG. 6 is a cross-sectional view of a porous support body according to Modification 3.
FIG. 7 is a cross-sectional view of a tube-type reactor 100 according to Modification 6.
FIG. 8 is a cross-sectional view of the tube-type reactor 100 according to Modification 6.

### DESCRIPTION OF EMBODIMENTS

Next, an embodiment of the present invention will be described with reference to the drawings. However, the drawings are schematic, and the ratio or the like of dimensions may differ from an actual one.

### Reactor 1

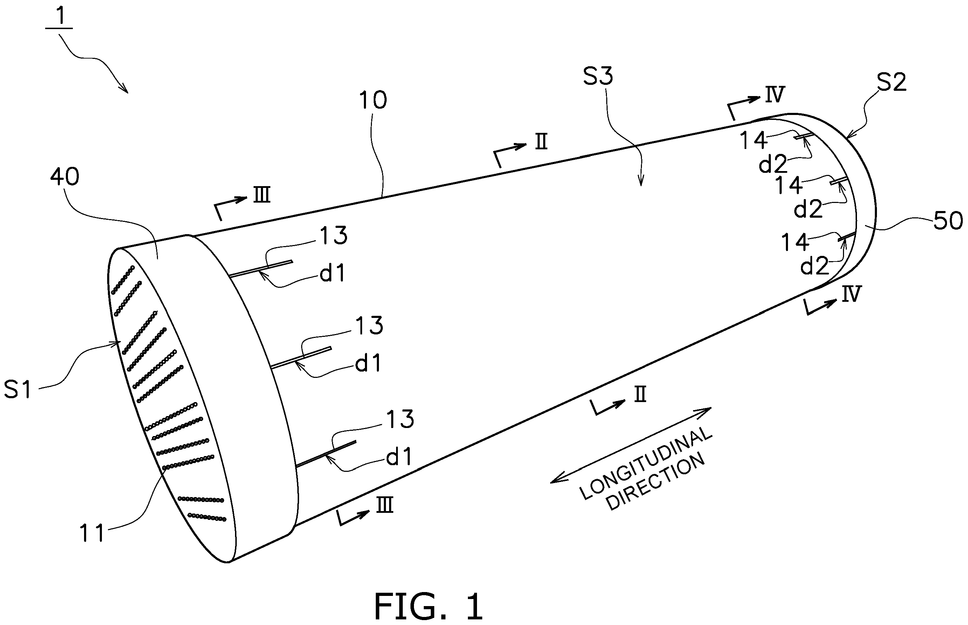

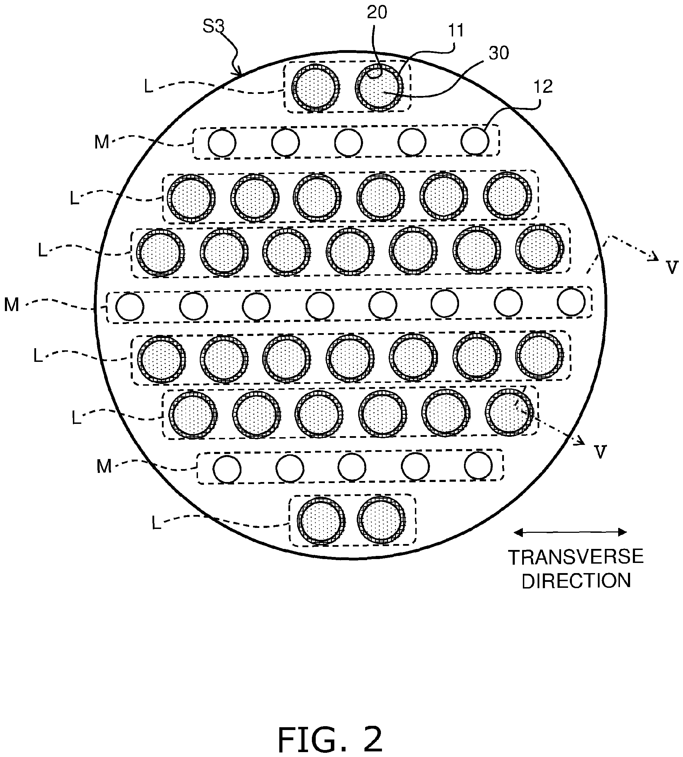

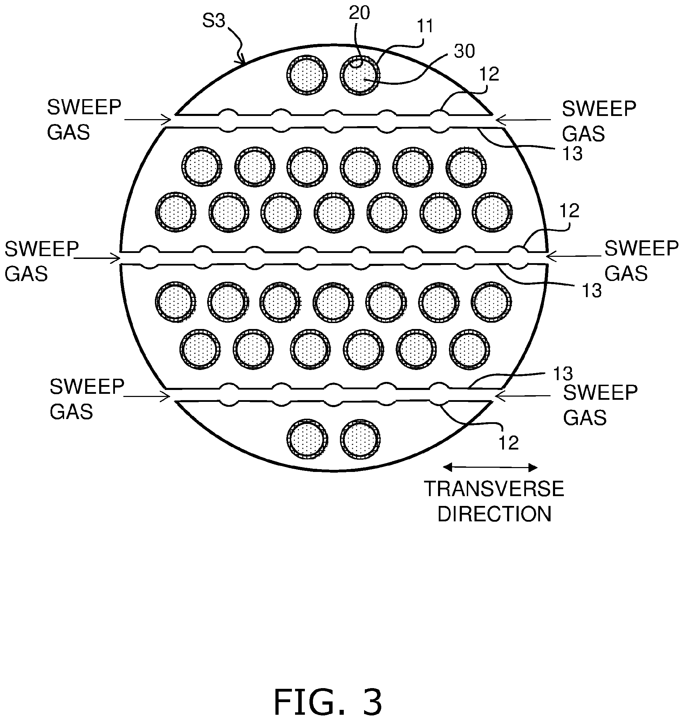

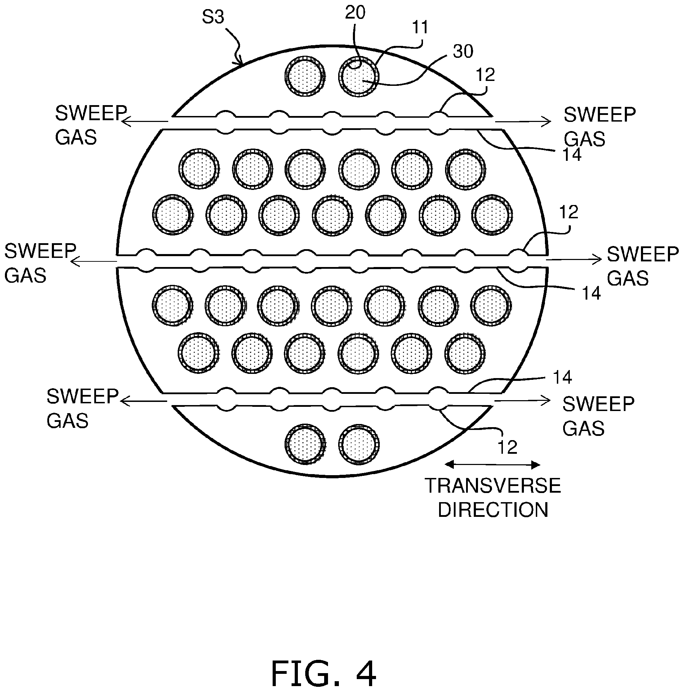

FIG. 1 is a perspective view of a reactor 1. FIG. 2 is a cross-sectional view taken along line II-II in FIG. 1. FIG. 3 is a cross-sectional view taken along line III-III in FIG. 1. FIG. 4 is a cross-sectional view taken along line IV-IV in FIG. 1.

FIGS. 2 to 4 show a cross section taken along a transversal direction orthogonal to a longitudinal direction of the reactor 1. In the following description, "cross section" means a cross-section taken along the transversal direction. The longitudinal direction is an example of "first direction" according to the present invention, and the transversal direction is an example of "second direction" according to the present invention.

The reactor 1 is a so-called membrane reactor used for a conversion reaction in which a raw material gas is converted into a liquid fuel. The raw material gas contains at least hydrogen and carbon oxide. At least one of carbon monoxide and carbon dioxide can be used as the carbon oxide. The raw material gas may be a so-called synthetic gas (syngas). The liquid fuel is a fuel that is in a liquid state at normal temperature and pressure, or a fuel that can be liquidized in a normal temperature and pressurized state. Examples of the fuel that is in a liquid state at normal temperature and pressure may include methanol, ethanol, liquid fuels represented by CₙH₂₍ₘ₋₂ₙ₎ (m is an integer less than 90, and n is an integer less than 30), and mixtures thereof. Examples of the fuel that can be liquidized in a normal temperature and pressurized state include, for example, propane, butane, and mixtures thereof.

For example, reaction formula (1) for synthesizing methanol by catalytically hydrogenating a raw material gas containing hydrogen and carbon dioxide in the presence of a catalyst is as follows.

CO₂ + 3H₂ ↔ CH₃OH + H₂O (1)

The above reaction is an equilibrium reaction, and in order to increase both the conversion efficiency and the reaction rate, it is preferable to carry out the reaction at a high temperature and high pressure (for example, 180 °C or higher and 2 MPa or higher). The liquid fuel is in a gaseous state when it is synthesized, and is kept in a gaseous state at least until it flows out of the reactor 1. The reactor 1 preferably has heat resistance and pressure resistance suitable for desired synthesis conditions of the liquid fuel.

As shown in FIG. 1, the reactor 1 has a monolith shape. The term "monolith" means a shape that includes a plurality of holes extending through in the longitudinal direction, and encompasses a honeycomb shape.

The reactor 1 includes a first end surface S1, a second end surface S2, and a side surface S3. The first end surface S1 is provided on the side opposite to the second end surface S2. The side surface S3 is continuous with outer edges of the first end surface S1 and the second end surface S2. In the present embodiment, the reactor 1 has a circular column shape.

As shown in FIGS. 1 to 4, the reactor 1 includes a porous support body 10, separation membranes 20, a catalyst 30, a first seal portion 40, and a second seal portion 50.

### Porous Support Body 10

The porous support body 10 is a columnar body extending in the longitudinal direction of the reactor 1. In the present embodiment, the cross-sectional shape of the porous support body 10 is a circular shape. In the present specification, a circle encompasses not only a true circle, but also a circle including distortions that unavoidably occur in manufacturing.

The porous support body 10 is constituted by a porous material. A ceramic material, a metallic material, a resin material, or the like can be used as the porous material, and a ceramic material is particularly favorable. For example, at least one of alumina (Al₂O₃), titania (TiO₂), mullite (Al₂O₃·SiO₂), potsherd, and cordierite (Mg₂Al₄Si₅O₁₈) can be used as an aggregate for the ceramic material. For example, at least one of titania, mullite, easily sinterable alumina, silica, glass frit, a clay mineral, and easily sinterable cordierite can be used as an inorganic binder for the ceramic material. However, the ceramic material need not necessarily contain an inorganic binder.

As shown in FIGS. 2 to 4, the porous support body 10 includes a plurality of first cells 11, a plurality of second cells 12, a plurality of first slits 13, and a plurality of second slits 14.

The first cells 11 extend in the longitudinal direction of the reactor 1. The first cells 11 pass through the porous support body 10 in the longitudinal direction. The first cells 11 are open at the first end surface S1 and the second end surface S2 of the reactor 1. The raw material gas flows in the first cells 11. In the present embodiment, the cross-sectional shape of the first cells 11 is circular. In this manner, formation of cracks in the separation membranes 20 can be suppressed.

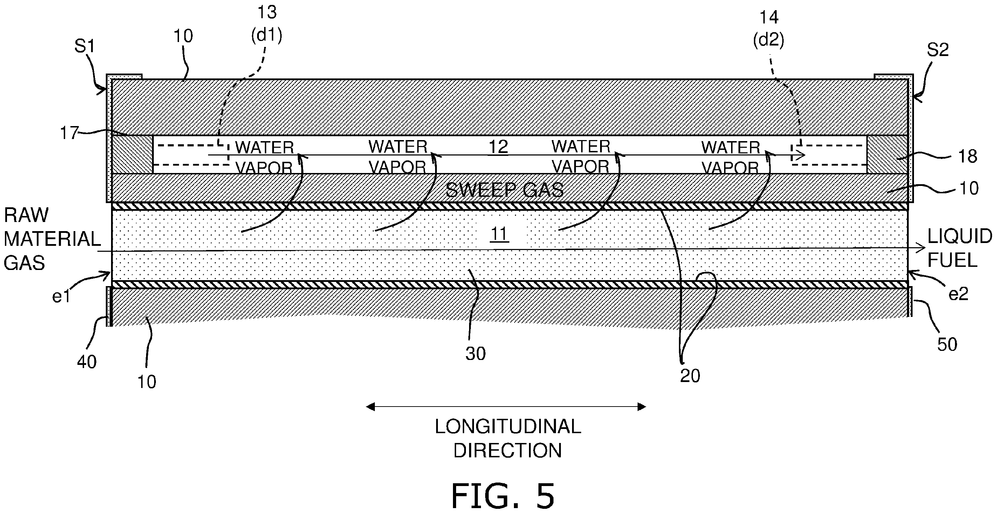

The second cells 12 extend in the longitudinal direction of the reactor 1. The second cells 12 are formed inside the porous support body 10. The second cells 12 do not pass completely through the porous support body 10 in the longitudinal direction. The second cells 12 are not open at the first end surface S1 and the second end surface S2 of the reactor 1. Specifically, the two ends of the second cells 12 are respectively sealed by first and second sealing portions 17 and 18 (see FIG. 5). The first and second sealing portions 17 and 18 can be constituted by the porous material. The sweep gas for sweeping water vapor that passed through the separation membrane 20 is caused to flow through the second cells 12. An inert gas (e.g., nitrogen), air, and the like can be used as the sweep gas. In the present embodiment, the cross-sectional shape of the second cells 12 is circular.

As shown in FIG. 2, the first cells 11 are arranged divided into six rows L extending along the transverse direction, and the second cells 12 are arranged divided into three rows M extending along the transverse direction. Each row L includes two or more of the first cells 11. Each row M includes five or more of the second cells 12. One row L of first cells 11 is provided on each side of each row M of second cells 12. Note that the number of rows L, the number of rows M, and the arrangements thereof may be changed as appropriate. Further, the number of first cells 11 included in the rows L, and the number of second cells 12 included in the rows M may be changed as appropriate.

As shown in FIG. 1, the first slits 13 are formed at a first end portion of the reactor 1. As shown in FIG. 3, the first slits 13 extend in the transverse direction. The first slits 13 extend through the porous support body 10 and first end portions of the rows M of second cells 12. Both ends of the first slits 13 are open at the side surface S3 of the reactor 1. The sweep gas flows through the first slits 13. In the present embodiment, the sweep gas is supplied from both ends of the first slits 13.

As sown in FIG. 1, the second slits 14 are formed at a second end portion of the reactor 1. As shown in FIG. 4, the second slits 14 extend in the transverse direction. The second slits 14 extend through the porous support body 10 and second end portions of the rows M of second cells 12. Both ends of the second slits 14 are open at the side surface S3 of the reactor 1. The sweep gas flows through the second slits 14. In the present embodiment, the sweep gas is supplied from both ends of the second slits 14.

Note that, since the second cells 12 are arranged divided into the three rows M in the present embodiment, three first slits 13 and three second slits 14 are provided, but the number of first and second slits 13 and 14 can be changed as appropriate according to the number of rows M of second cells 12.

The porous support body 10 is produced by sintering a molded body in which the first and second cells 11 and 12 are formed, and then by punching the first and second slits 13 and 14 for each row M of second slits 14.

Here, as shown in FIG. 2, the average cross-sectional area of the plurality of first cells 11 is larger than the average cross-sectional area of the plurality of second cells 12.

In this manner, by setting the average cross-sectional area of the first cells 11 relatively larger, the volume of a space in which the later-described catalyst 30 is disposed (non-permeable side space on the inner side of the separation membrane 20) can be increased. Accordingly, the amount of catalyst 30 which promotes the conversion reaction can be increased, and thus the efficiency of conversion from the raw material gas into the liquid fuel can be increased. In addition, by setting the average cross-sectional area of the second cells 12 relatively smaller, a decrease in the percentage of area occupied by the porous support body 10 in cross section can be suppressed. Accordingly, since the volume of the void in the porous support body 10 can be decreased, the strength of the porous support body 10 can be ensured. Therefore, according to the reactor 1 according to the present embodiment, both improvement of the conversion efficiency and ensuring strength can be achieved.

The average cross-sectional area of the first cells 11 can be obtained by finding the arithmetic mean of the cross-sectional areas of the first cells 11. The average cross-sectional area of the second cells 12 can be obtained by finding the arithmetic mean of the cross-sectional areas of the second cells 12.

In the present embodiment, the cross-sectional shape of the first cells 11 is circular, and the cross-sectional shape of the second cells 12 is circular. Accordingly, by setting the average diameter of the second cells 12 smaller than the average diameter of the first cells 11, the average cross-sectional area of the second cells 12 can be set smaller than the average cross-sectional area of the first cells 11. In addition, the average cross-sectional areas of the first and second cells 11 and 12 can be easily adjusted by changing the average diameters of the first and second cells 11 and 12.

The average diameter of the first cells 11 is obtained by finding the arithmetic mean of the equivalent circle diameters of the first cells 11 in cross section. The average diameter of the second cells 12 is obtained by finding the arithmetic mean of the equivalent circle diameters of the second cells 12 in cross section. The equivalent circle diameter is a diameter of a circle that has the same area as that of the cross section of the cell. If the cross section of the cell is a true circle, the equivalent circle diameter is the same as the diameter of the true circle.

Although the sum area ratio of the first cells 11 relative to the cross section is not particularly limited, for example, it may be 15 % or more and 40 % or less. In this case, the number of the first cells 11 may be 20 or more and 1700 or less, for example.

Although the sum area ratio of the second cells 12 relative to the cross section is not particularly limited, for example, it may be 5 % or more and 15 % or less. In this case, the number of the second cells 12 may be 40 or more and 700 or less, for example.

The sum area ratio of the first cells 11 is obtained by dividing the sum of the cross-sectional areas of the first cells 11 by the total area of the porous support body 10 in the cross section (including the cross-sectional areas of the first and second cells 11 and 12). The sum area ratio of the second cells 12 is obtained by dividing the sum of the cross-sectional areas of the second cells 12 by the total area of the porous support body 10 in the cross section.

Note that the average cross-sectional area, the average diameter of the first and second cells 11 and 12, and the sum area ratio are calculated in a cross section taken at the center in the longitudinal direction of the porous support body 10.

### Separation Membrane 20

The separation membranes 20 are supported by the porous support body 10. The separation membranes 20 are formed on the inner peripheral surfaces of the first cells 11. The separation membranes 20 have a tubular shape. The separation membranes 20 surround the catalyst 30.

The separation membrane 20 is permeable to water vapor, which is one of the products generated as a result of the conversion reaction in which the raw material gas is converted into the liquid fuel. Thus, the reaction equilibrium of the above formula (1) can be shifted to the product side by utilizing an equilibrium shift effect.

It is preferable that the separation membrane 20 has a water vapor permeability coefficient of 100 nmol/(s· Pa· m²) or more. The water vapor permeability coefficient can be obtained using a known method (see Ind. Eng. Chem. Res., 40, 163-175(2001)).

It is preferable that the separation membrane 20 has a separation coefficient of 100 or more. The greater the separation coefficient, the easier it is for water vapor to pass through the separation membrane 20 and the more difficult it is for components (hydrogen, carbon oxide, the liquid fuel, etc.) other than water vapor to pass through the separation membrane 20. The separation coefficient can be obtained using a known method (see FIG. 1 in "Separation and Purification Technology 239 (2020) 116533").

An inorganic membrane can be used as the separation membrane 20. Inorganic membranes have heat resistance, pressure resistance, and water vapor resistance, and thus are preferable. Examples of inorganic membranes include zeolite membranes, silica membranes, alumina membranes, and composite membranes thereof. In particular, LTA-type zeolite membranes in which a molar ratio (Si/Al) between silicon element (Si) and aluminum element (Al) is 1.0 or more and 3.0 or less have excellent water vapor permeability and thus are favorable.

### Catalyst 30

The catalyst 30 promotes the conversion reaction shown in the above formula (1). The catalyst 30 is disposed in a non-permeable side space inside the separation membrane 20. The catalyst 30 is preferably provided in the non-permeable side space, but may also be disposed so as to form a layer or an island on the inner peripheral surface of the separation membrane 20.

A known catalyst suitable for the conversion reaction for obtaining the desired liquid fuel can be used as the catalyst 30. Examples of the catalyst 30 include metal catalysts (copper, palladium, etc.), oxide catalysts (zinc oxide, zirconia, gallium oxide, etc.), and composites of these (copper-zinc oxide, copper-zinc oxide-alumina, copper-zinc oxide-chromium oxide-alumina, copper-cobalt-titania, and these catalysts modified with palladium, etc.).

### First and Second Seal Portions 40 and 50

The first seal portion 40 covers a first end surface of the porous support body 10 as shown in FIG. 1. The first seal portion 40 suppresses entrance of the raw material gas into the porous support body 10. The first seal portion 40 is formed such that openings of the first cells 11 are not closed. The first seal portion 40 may be constituted of glass, metal, rubber, resin, or the like.

The second seal portion 50 covers a second end surface of the porous support body 10 as shown in FIG. 1. The second seal portion 50 suppresses entrance of the liquid fuel into the porous support body 10. The second seal portion 50 is formed such that openings of the first cells 11 are not closed. The second seal portion 50 may be constituted of glass, metal, rubber, resin, or the like.

### Liquid Fuel Synthesis Method Using Reactor 1

Next, a method for synthesizing the liquid fuel using the reactor 1 will be described. FIG. 5 is a cross-sectional view taken along line V-V in FIG. 2.

The method for synthesizing the liquid fuel using the reactor 1 includes a step of causing the sweep gas to flow through the second flow paths 12 while causing the raw material gas to flow through the first cells 11.

The raw material gas flows into the first cells 11 through inlet ports e1 of the first cells 11. In the first cells 11, as a result of the reaction of the catalyst 30, the liquid fuel is synthesized from the raw material gas, while water vapor is generated. The synthesized liquid fuel flows out to the outside through outlet ports e2 of the first cells 11. Water vapor, which is one of the products, passes through the separation membranes 20 and the porous support body 10 in this order, and enters the second flow paths 12.

The sweep gas flows into the first slits 13 through inlet ports d1 of the first slits 13 and then flows into the second cells 12. Then, the sweep gas that has flowed into the second cells 12 takes in water vapor that has passed through the separation membrane 20 while absorbing reaction heat generated in the conversion reaction, and then flows out to the outside through outlet ports d2 of the second slits 14.

In FIG. 5, the direction of flow of the raw material gas in the first cells 11 is the same as the direction of flow of the sweep gas in the second cells 12, but the directions may be opposite to each other.

### Modifications of Embodiment

Although embodiments of the present invention have been described above, the present invention is not limited to the above embodiments, and various modifications can be made without departing from the gist of the invention.

### Modification 1

Although the cross-sectional shape of the porous support body 10 is circular in the above embodiment, the cross-sectional shape may also be oval or the like, for example.

### Modification 2

Although the cross-sectional shape of the first cells 11 is circular in the above embodiment, the cross-sectional shape may also be oval. Even if the cross-sectional shape of the first cells 11 is oval, the formation of a crack in the separation membranes 20 can be suppressed. The oval shape encompasses a shape having distortions that unavoidably occurs in manufacturing. Even if the cross-sectional shape of the first cells 11 is oval, as described in the embodiment, the average diameter of the first cells 11 can be obtained by finding the arithmetic mean of the equivalent circle diameters of the first cells 11.

### Modification 3

Although the cross-sectional shape of the second cells 12 is circular in the above embodiment, the cross-sectional shape may also be oval, polygonal, or a complex shape other than these. The oval and polygonal shapes encompass shapes having distortions that unavoidably occur in manufacturing. The polygonal shape encompasses not only a polygon in which all the corners are bent, but also a polygon in which at least one corner is curved. Even if the cross-sectional shape of the second cells 12 is oval or polygonal, as described in the embodiment, the average diameter of the second cells 12 can be obtained by finding the arithmetic mean of the equivalent circle diameters of the second cells 12.

### Modification 4

Although the example is described in which one row L of first cells 11 is provided on each side of each row M of second cells 12 in the above embodiment, the arrangement of the first and second cells 11 and 12 can be changed as appropriate.

For example, the number of rows M may be only one, or two or more. The positions of the rows M are not particularly limited, and the rows M may be provided at positions shifted from a center point of the porous support body 10. Furthermore, if two or more rows M are provided, at least two rows M may be orthogonal to or intersect each other. By doing so, the strength of the porous support body 10 can be improved compared to a case where all the rows M are arranged so as not to be orthogonal to or intersecting each other. In this case, the first cells 11 may be arranged in a region where the rows M are not disposed regardless of whether the rows L are formed or not.

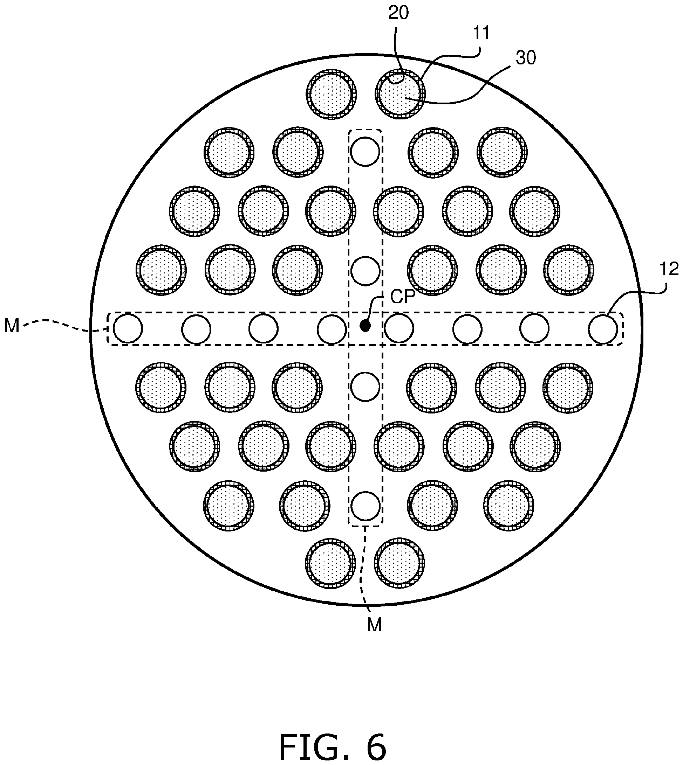

In addition, as shown in FIG. 6, a plurality of second cells 12 can be arranged pointsymmetrically about a center point CP of the porous support body 10. In this case, by disposing at least two rows M orthogonal to or intersecting each other, not only the strength of the porous support body 10 can be improved, but also the occurrence of anisotropy in the strength of the porous support body 10 can be suppressed. Therefore, the strength of the porous support body 10 can be further improved. "Point-symmetry" means not only a case in which when the cross section of the second cells 12 are rotated 180° about the center point CP, the rotated cross section matches the original cross section, but also a case in which the rotated cross section does not partially match the original cross section due to deviations or distortions that unavoidably occur in manufacturing.

Note that, in the state shown in FIG. 6, the second cells 12 are arranged in the two rows M. Accordingly, two of first and second slits 13 and 14 that pass through the rows M may be provided. The two first slits 13 intersect (merge with) each other near the center point CP, and the two second slits 14 intersect each other near the center point CP.

Note that, when the second cells 12 are arranged in a point symmetric manner as shown in FIG. 6, the number of rows M of second cells 12 is not limited, and may be at least one.

### Modification 5

In the embodiments described above, the separation membrane 20 is permeable to water vapor, which is one of the products generated as a result of the conversion reaction in which the raw material gas is converted into the liquid fuel, but there is no limitation to this configuration. The separation membrane 20 may also be permeable to the liquid fuel generated as a result of the conversion reaction in which the raw material gas is converted into the liquid fuel. In this case as well, it is possible to shift the reaction equilibrium of the above formula (1) to the product side.

Also, when the separation membrane 20 is permeable to the liquid fuel, even when generating the liquid fuel through a reaction in which no water vapor is generated (e.g., H₂ + CO ↔ CH₃OH), the reaction equilibrium can be shifted to the product side.

### Modification 6

The above embodiment described that, in the monolith-type reactor, by optimizing the cross sections of the first and second cells 11 and 12, both improvement in the conversion efficiency and ensuring strength can be achieved.

However, the type of the reactor is not limited to the monolith-type, and the reactor may also be a tube-type. In the tube-type reactor as well, by optimizing the cross sections of the first and second cells, both improvement of the conversion efficiency and ensuring strength can be achieved.

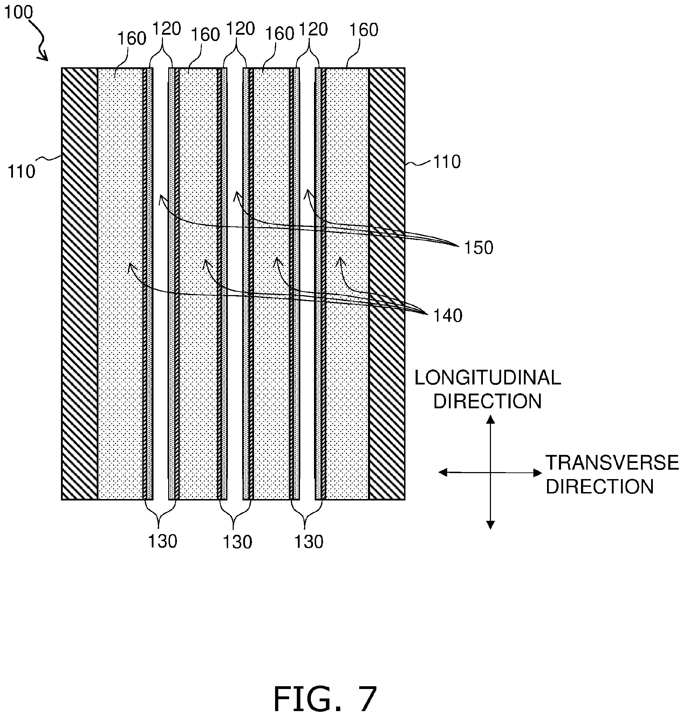

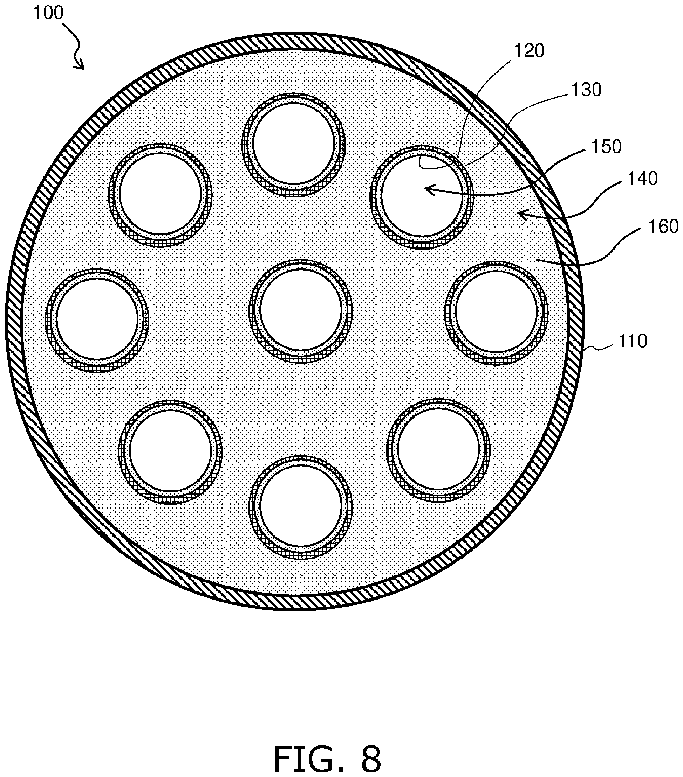

FIG. 7 is a cross-sectional view of a tube-type reactor 100 according to the present modification taken along the longitudinal direction. FIG. 8 is a cross-sectional view of the tube-type reactor 100 according to the present modification taken along the transverse direction. The longitudinal direction is an example of a "first direction" according to the present invention, and the transverse direction is an example of a "second direction" according to the present invention. The transverse direction is perpendicular to the longitudinal direction.

The reactor 100 is used for the conversion reaction in which the raw material gas containing at least hydrogen and carbon oxide is converted into the liquid fuel.

As shown in FIGS. 7 and 8, the reactor 100 includes a housing 110, a plurality of porous support bodies 120, a plurality of separation membranes 130, a first cell 140, a plurality of second cells 150, and a catalyst 160.

The housing 110 is a housing of the reactor 100. The housing 110 has a tube shape extending in the longitudinal direction.

The porous support bodies 120 support the separation membranes 130. The porous support bodies 120 have a tube shape extending in the longitudinal direction. The outer surfaces of the porous support bodies 120 are surrounded by the separation membranes 130. The inside of the porous support bodies 120 is hollow. The constituent material of the porous support bodies 120 is the same as that of the porous support body 10 according to the above embodiment.

The separation membranes 130 are supported by the porous support bodies 120. In the present modification, the separation membranes 130 are respectively disposed on the outer surfaces of the porous support bodies 120. The separation membranes 130 have a tube shape extending in the longitudinal direction. The separation membranes 130 are surrounded by the catalyst 160. The separation membranes 130 allows a product generated from the raw material gas in the first cell 140 (water vapor or liquid fuel) to pass therethrough toward the second cells 150. The characteristics and constituent material of the separation membranes 130 are the same as that of the separation membrane 20 according to the above embodiment. Note that the separation membranes 130 may also be disposed respectively on the inner surfaces of the porous support bodies 120.

The first cell 140 is provided on the non-permeation side of the separation membranes 130. The first cell 140 is a space between the outer surfaces of the separation membranes 130 and the inner surface of the housing 110. The raw material gas flows through the first cell 140. The first cell 140 extends in the longitudinal direction.

The second cells 150 are respectively provided inside the porous support bodies 120. Each second cell 150 is a space on the permeation side of the separation membrane 130. The sweep gas flows through the second cells 150. The second cells 150 extend in the longitudinal direction.

The catalyst 160 is disposed inside the first cell 140. The catalyst 160 promotes the conversion reaction in which the raw material gas is converted into the liquid fuel. The constituent material of the catalyst 160 is the same as that of the catalyst 30 according to the above embodiment.

Here, as shown in FIG. 8, in the cross section taken along the transverse direction, the value obtained by dividing the cross-sectional area of the first cell 140 by the number of the second cells 150 is larger than the average cross-sectional area of the second cells 150. In this manner, the volume of the first cell 140 assigned to one second cell 150 can be larger. In other words, if it is assumed that the first cell 140 is an aggregate of a plurality of small cells corresponding to the plurality of second cells 150, the volume of each small cell can be larger than the volume of each second cell 150. Accordingly, since the amount of the catalyst 160 disposed in the first cell 140, which is an aggregate of the plurality of small cells can be increased, the efficiency of conversion from the raw material gas into the liquid fuel can be improved.

In addition, since the number of second cells 150 can be increased while making the value obtained by dividing the cross section of the first cell 140 by the number of the second cells 150 larger than the average cross-sectional area of the second cells 150, the stress applied to the second cells 150 due to the weight of the catalyst 160 and thermal expansion of the catalyst 160 can be reduced. Accordingly, damage to the porous support bodies 120 of the second cells 150 can be suppressed.

As described above, according to the tube-type reactor 100 according to the present modification, both improvement of the conversion efficiency and ensuring strength can be achieved.

### REFERENCE SIGNS LIST

- 1: Monolith-type reactor
- 10: Porous support body
- 11: First cell
- L: Row of first cell
- 12: Second cell
- M: Row of second cell
- 13: First slit
- 14: Second slit
- d2: Outlet port
- 20: Separation membrane
- 30: Catalyst
- 100: Tube-type reactor
- 110: Housing
- 120: Porous support body
- 130: Separation membrane
- 140: First cell
- 150: Second cell
- 160: Catalyst

## Claims

1. A monolith-type reactor used for a conversion reaction for converting a raw material gas into a liquid fuel, the raw material gas containing at least hydrogen and carbon oxide, the reactor comprising:
a porous support body;
a plurality of first cells passing through the porous support body in a first direction, the raw material gas flowing through the plurality of first cells;
a plurality of second cells extending inside the porous support body in the first direction, a sweep gas flowing through the plurality of second cells;
a separation membrane formed on an inner peripheral surface of each of the plurality of first cells, and permeable to a product of the conversion reaction; and
a catalyst disposed inside the separation membrane and configured to promote the conversion reaction, wherein
in a cross section taken along a second direction perpendicular to the first direction, an average cross-sectional area of the plurality of first cells is larger than an average cross-sectional area of the plurality of second cells.

2. The reactor according to claim 1, wherein
in the cross section, the plurality of first cells each have a circular shape,
in the cross section, the plurality of second cells each have a circular shape, and
in the cross section, an average diameter of the plurality of first cells is larger than an average diameter of the plurality of second cells.

3. The reactor according to claim 1, wherein
in the cross section, the plurality of first cells each have a circular shape,
in the cross section, the plurality of second cells each have a polygonal shape, and
in the cross section, an average diameter of the plurality of first cells is larger than an average diameter of the plurality of second cells.

4. The reactor according to claim 1, further comprising:
a plurality of first slits, the sweep gas flowing through the first slits; and
a plurality of second slits, the sweep gas flowing through the second slits, wherein
in the cross section, the plurality of second cells are arranged in a plurality of rows,
the plurality of first slits respectively pass through first end portions of the plurality of rows, and
the plurality of second slits respectively pass through second end portions of the plurality of rows.

5. A tube-type reactor used for a conversion reaction for converting a raw material gas into a liquid fuel, the raw material gas containing at least hydrogen and carbon oxide, the reactor comprising:
a plurality of separation membranes each supported by a porous support body;
a first cell disposed on a non-permeation side of the plurality of separation membranes, the raw material gas flowing through the first cell;
a plurality of second cells respectively disposed inside the porous support bodies, a sweep gas flowing through the second cells; and
a catalyst disposed inside the first cell and configured to promote the conversion reaction, wherein
the first cell and the plurality of second cells extend in a first direction, and
in a cross section taken along a second direction perpendicular to the first direction, a value obtained by dividing a cross-sectional area of the first cell by the number of second cells is larger than an average cross-sectional area of the plurality of second cells.
